# EUROPEAN PATENT SPECIFICATION

(11) **EP 3 395 095 B1**
(45) Date of publication and mention of the grant of the patent: **13.05.2020**
(21) Application number: 17756785.6
(22) Date of filing: 22.02.2017
(51) Int. Cl.: H04W 28/06, H04W 28/02, H04W 88/04

(54) **METHOD AND APPARATUS FOR RELAYING USING NON-3GPP RADIO ACCESS TECHNOLOGY IN WIRELESS COMMUNICATION SYSTEM**
VERFAHREN UND VORRICHTUNG ZUR VERMITTLUNG MIT VERWENDUNG VON NICHT-3GPP-FUNKZUGRIFFSTECHNOLOGIE IN EINEM DRAHTLOSKOMMUNIKATIONSSYSTEM
PROCÉDÉ ET APPAREIL POUR EFFECTUER UN RELAIS À L'AIDE D'UNE TECHNOLOGIE D'ACCÈS RADIO NON 3GPP DANS UN SYSTÈME DE COMMUNICATION SANS FIL

(30) Priority: 24.02.2016 US 201662299550 P; 08.03.2016 US 201662305495 P; 12.08.2016 US 201662374016 P
(43) Date of publication of application: 31.10.2018
(73) Proprietor: LG Electronics Inc., Seoul 07336 (KR)
(72) Inventor: LEE, Youngdae, Seoul 06772 (KR); LEE, Jaewook, Seoul 06772 (KR); JUNG, Sunghoon, Seoul 06772 (KR)
(74) Representative: Maikowski & Ninnemann Patentanwälte Partnerschaft mbB
(86) International application number: PCT/KR2017/001918
(87) International publication number: WO 2017/146447

(56) References cited:
- WO-A1-2015/105383
- WO-A1-2016/013888
- KR-A- 20140 052 083
- US-A1- 2014 056 209
- LG ELECTRONICS INC HUAWEI ET AL: "mIoT Clarification on Operational and Connectivity Family", 3GPP DRAFT; S1-160098 MIOT CLARIFICATION ON MIOT FAMILY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. Japan; 20160201 - 20160205 31 January 2016 (2016-01-31), XP051059103, Retrieved from the Internet: URL:http://www.3gpp.org/ftp/Meetings_3GPP_ SYNC/SA1/Docs/ [retrieved on 2016-01-31]
- "Introduction an LWAAP specification", 3GPP TSG RAN WG2 Meeting #93 R2-161087, 2 February 2016 (2016-02-02), XP051065338, St. Julians, Malta Retrieved from the Internet: URL:http://www.3gpp.org/ftp/tsg-ran/WG2_RL 2/TSGR2_93/Docs
- "New WI Proposal: LTE-WLAN Radio Level Integration and Interworking Enhancement", 3GPP TSG RAN Meeting #67 RP-150510, 12 March 2015 (2015-03-12), XP055412110, Shanghai, China Retrieved from the Internet: URL:http://www.3gpp.org/ftp/tsg-Ran/tsg-Ra n/TSGR-67/Docs
- Intel Corporation; KT Corp: "Requirement on integration and interworking with non-3GPP technologies and networks", 3GPP TSG RAN ad hoc RP-160034, 26 January 2016 (2016-01-26), XP051053232, Barcelona, Spain Retrieved from the Internet: URL:http://www.3gpp.org/ftp/tsg_ran/TSG_RA N/TSGR_AHs/2016_1_Next_Generation_Access/D ocs

## Description

### BACKGROUND OF THE INVENTION

### Field of the Invention

The present invention relates to wireless communications, and more particularly, to a method and apparatus for relaying using non-3rd generation partnership project (3GPP) radio access technology (RAT) in a wireless communication system.

### Related Art

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Wireless local area network (WLAN) interworking and integration is currently supported by 3GPP specifications at the CN level, including both seamless and non-seamless mobility to WLAN. 3GPP have agreed to study potential RAN level enhancements for WLAN/3GPP interworking in Rel-12. Specifically, in addition to ANDSF, policy, i.e. radio access network (RAN) rule, has been specified in Rel-12 for interworking between 3GPP access network and non-3GPP access network (e.g. WLAN). By this policy, access network selection and traffic steering between LTE and WLAN can be supported.

Interworking between LTE and WLAN is moving in the direction of increasingly integrating LTE and WLAN. Accordingly, LTE-WLAN aggregation as well as LTE-WLAN interworking enhancements has been studied recently.

Wearable devices, such as smart watches, are now available as a new type of UE on the market. As the number of wearable devices is increasing, customers' needs for those devices are growing. For instance, customers expect extremely long battery life from smart watches, like battery life of normal watches, while expecting support of various application/services including delay sensitive services, e.g. voice, streaming, eHealth, like normal smart phones. To provide long battery life, 3GPP specified power saving mode in Rel-12 and extended discontinuous reception (DRX) in Rel-13. However, those features are not suited to delay sensitive services in wearable devices which support LTE access.

3GPP SA1 study item New Services and Markets Technology Enablers (SMARTER) has been progressed in 2015. One of the aspects in SMARTER is to provide enhanced connectivity to wearable device and intemet-of-things (IoT) devices in the context of connectivity aspects. The enhanced connectivity allows a device to be connected to the network through another UE. The device can switch between a direct connection and a relayed connection to the network.

WO 2016 / 013888 A1 relates to methods for efficiently relaying device to device (D2D) data utilizing a relay terminal (rUE) in a wireless access system supporting D2D communication, and apparatuses for supporting the methods. As one example, a method for relaying D2D data by a relay terminal in a wireless access system supporting D2D communication may comprise the steps of: receiving a scheduling allocation (SA) signal for allocating a resource area where the D2D data are transmitted; receiving at least one D2D data; and relaying, from among the at least one D2D data, only the first D2D data received from a terminal out of coverage. The first D2D data among the at least one D2D data can be detected on the basis of a SA signal and a medium access control header relating to the at least one D2D data.

### SUMMARY OF THE INVENTION

The invention is defined by the independent claims. Embodiments are defined by the dependent claims. The present invention provides a method and apparatus for relaying using non-3rd generation partnership project (3GPP) radio access technology (RAT) in a wireless communication system. The present invention provides a radio control plane protocol stack for supporting a relay user equipment (UE) UE via non-3GPP RAT.

In an aspect, a method for determining a destination of data, by a relay user equipment (UE), in a wireless communication system is provided. The method includes receiving information on whether the data is to be forwarded to an upper layer of the relay UE or is to be forwarded to a remote UE or a network, wherein the information is included in a media access control (MAC) header, and determining whether the data is to be forwarded to the upper layer of the relay UE or is to be forwarded to the remote UE or the network, according to the received information.

In another aspect, a method for determining a destination of data, by a relay user equipment (UE), in a wireless communication system is provided. The method includes receiving, at a specific layer located below a packet data convergence protocol (PDCP) layer, a data unit including differentiation information for control plane data, and identifying, at the specific layer, where the data unit is destined according to the differentiation information.

Relaying using non-3GPP RAT can be feasible.

### BRIEF DESCRIPTION OF THE DRAWINGS

FIG. 1 shows LTE system architecture.
FIG. 2 shows a block diagram of architecture of a typical E-UTRAN and a typical EPC.
FIG. 3 shows a block diagram of a user plane protocol stack of an LTE system.
FIG. 4 shows a block diagram of a control plane protocol stack of an LTE system.
FIG. 5 shows an example of a physical channel structure.
FIG. 6 shows a non-collocated LWA overall architecture.
FIG. 7 shows an overview model of a LWAAP sublayer.
FIG. 8 shows a LWAAP data PDU.
FIG. 9 shows LWA radio protocol architecture for a collocated scenario.
FIG. 10 shows LWA radio protocol architecture for a non-collocated scenario.
FIG. 11 shows LWIP protocol architecture.
FIG. 12 shows an end-to-end protocol stack for a bearer transported over LWIP tunnel.
FIG. 13 shows an example of a radio control plane protocol stack for supporting relay UE via WLAN according to an embodiment of the present invention.
FIG. 14 shows another example of a radio control plane protocol stack for supporting relay UE via WLAN according to an embodiment of the present invention.
FIG. 15 shows an example of a radio protocol stack for supporting relay UE using LWIP according to an embodiment of the present invention.
FIG. 16 shows another example of a radio protocol stack for supporting relay UE using LWIP according to an embodiment of the present invention.
FIG. 17 shows another example of a radio protocol stack for supporting relay UE using LWIP according to an embodiment of the present invention.
FIG. 18 shows a method for determining destination of data according to an embodiment of the present invention.
FIG. 19 shows a method for determining destination of data according to another embodiment of the present invention.
FIG. 20 shows a wireless communication system to implement an embodiment of the present invention.

### DESCRIPTION OF EXEMPLARY EMBODIMENTS

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802-20, evolved UTRA (E-UTRA), etc. IEEE 802.16m is an evolution of IEEE 802.16e, and provides backward compatibility with an IEEE 802.16-based system. The UTRA is a part of a universal mobile telecommunication system (UMTS). 3rd generation partnership project (3GPP) long term evolution (LTE) is a part of an evolved UMTS (E-UMTS) using the E-UTRA. The 3GPP LTE uses the OFDMA in downlink and uses the SC-FDMA in uplink. LTE-advance (LTE-A) is an evolution of the 3GPP LTE.

For clarity, the following description will focus on the LTE-A. However, technical features of the present invention are not limited thereto.

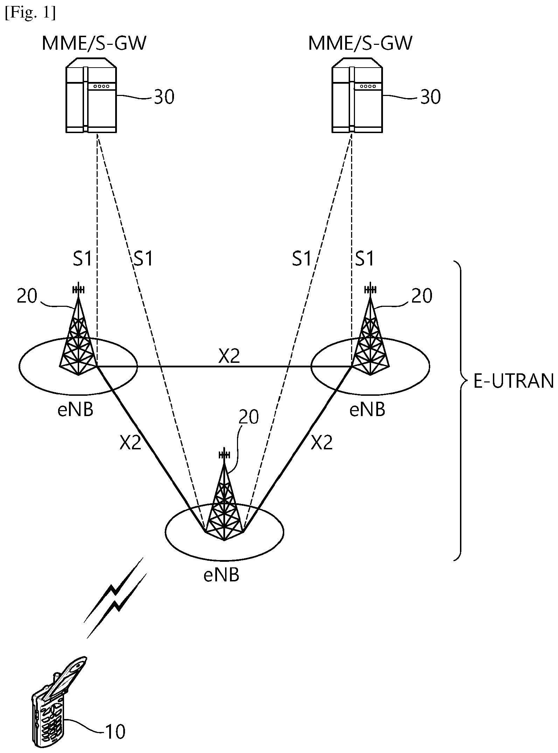

FIG. 1 shows LTE system architecture. The communication network is widely deployed to provide a variety of communication services such as voice over internet protocol (VoIP) through IMS and packet data.

Referring to FIG. 1, the LTE system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN includes one or more evolved node-B (eNB) 20, and a plurality of UEs may be located in one cell. The eNB 20 provides an end point of a control plane and a user plane to the UE 10. The eNB 20 is generally a fixed station that communicates with the UE 10 and may be referred to as another terminology, such as a base station (BS), an access point, etc. One eNB 20 may be deployed per cell.

Hereinafter, a downlink (DL) denotes communication from the eNB 20 to the UE 10, and an uplink (UL) denotes communication from the UE 10 to the eNB 20. In the DL, a transmitter may be a part of the eNB 20, and a receiver may be a part of the UE 10. In the UL, the transmitter may be a part of the UE 10, and the receiver may be a part of the eNB 20.

The EPC includes a mobility management entity (MME) and a serving gateway (S-GW). The MME/S-GW 30 may be positioned at the end of the network. For clarity, MME/S-GW 30 will be referred to herein simply as a "gateway," but it is understood that this entity includes both the MME and S-GW. A packet data network (PDN) gateway (P-GW) may be connected to an external network.

The MME provides various functions including non-access stratum (NAS) signaling to eNBs 20, NAS signaling security, access stratum (AS) security control, inter core network (CN) node signaling for mobility between 3GPP access networks, idle mode UE reachability (including control and execution of paging retransmission), tracking area list management (for UE in idle and active mode), packet data network (PDN) gateway (P-GW) and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (by e.g., deep packet inspection), lawful interception, UE Internet protocol (IP) address allocation, transport level packet marking in the DL, UL and DL service level charging, gating and rate enforcement, DL rate enforcement based on access point name aggregate maximum bit rate (APN-AMBR).

Interfaces for transmitting user traffic or control traffic may be used. The UE 10 is connected to the eNB 20 via a Uu interface. The eNBs 20 are connected to each other via an X2 interface. Neighboring eNBs may have a meshed network structure that has the X2 interface. A plurality of nodes may be connected between the eNB 20 and the gateway 30 via an S1 interface.

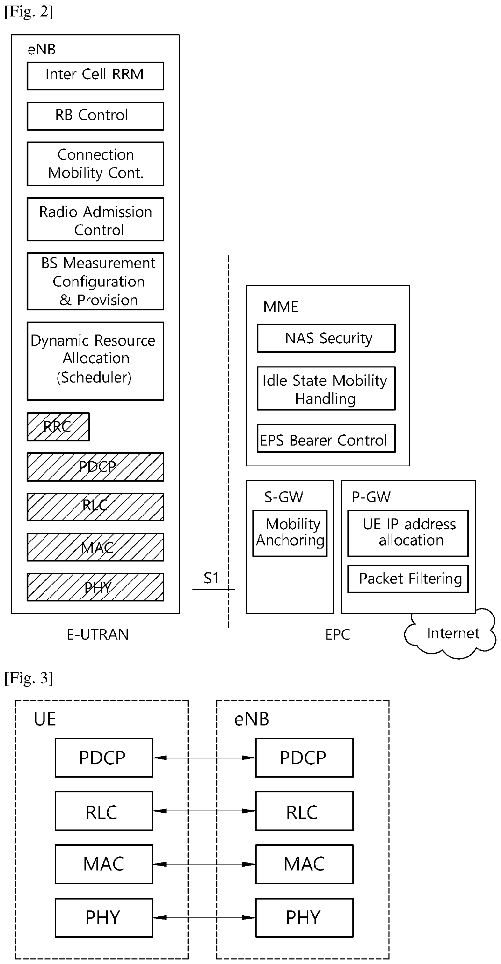

FIG. 2 shows a block diagram of architecture of a typical E-UTRAN and a typical EPC. Referring to FIG. 2, the eNB 20 may perform functions of selection for gateway 30, routing toward the gateway 30 during a radio resource control (RRC) activation, scheduling and transmitting of paging messages, scheduling and transmitting of broadcast channel (BCH) information, dynamic allocation of resources to the UEs 10 in both UL and DL, configuration and provisioning of eNB measurements, radio bearer control, radio admission control (RAC), and connection mobility control in LTE_ACTIVE state. In the EPC, and as noted above, gateway 30 may perform functions of paging origination, LTE_IDLE state management, ciphering of the user plane, SAE bearer control, and ciphering and integrity protection of NAS signaling.

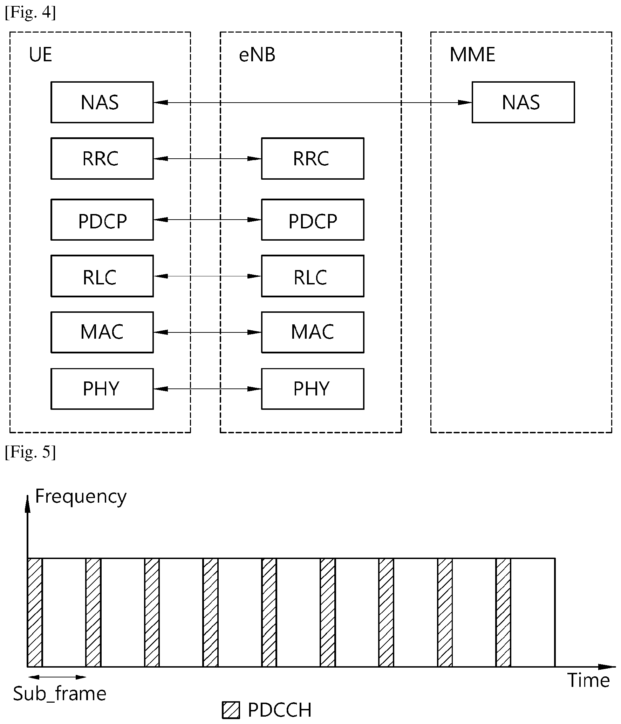

FIG. 3 shows a block diagram of a user plane protocol stack of an LTE system. FIG. 4 shows a block diagram of a control plane protocol stack of an LTE system. Layers of a radio interface protocol between the UE and the E-UTRAN may be classified into a first layer (LI), a second layer (L2), and a third layer (L3) based on the lower three layers of the open system interconnection (OSI) model that is well-known in the communication system.

A physical (PHY) layer belongs to the L1. The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data between the MAC layer and the PHY layer is transferred through the transport channel. Between different PHY layers, i.e., between a PHY layer of a transmission side and a PHY layer of a reception side, data is transferred via the physical channel.

A MAC layer, a radio link control (RLC) layer, and a packet data convergence protocol (PDCP) layer belong to the L2. The MAC layer provides services to the RLC layer, which is a higher layer of the MAC layer, via a logical channel. The MAC layer provides data transfer services on logical channels. The RLC layer supports the transmission of data with reliability. Meanwhile, a function of the RLC layer may be implemented with a functional block inside the MAC layer. In this case, the RLC layer may not exist. The PDCP layer provides a function of header compression function that reduces unnecessary control information such that data being transmitted by employing IP packets, such as IPv4 or Ipv6, can be efficiently transmitted over a radio interface that has a relatively small bandwidth.

A radio resource control (RRC) layer belongs to the L3. The RLC layer is located at the lowest portion of the L3, and is only defined in the control plane. The RRC layer controls logical channels, transport channels, and physical channels in relation to the configuration, reconfiguration, and release of radio bearers (RBs). The RB signifies a service provided the L2 for data transmission between the UE and E-UTRAN.

Referring to FIG. 3, the RLC and MAC layers (terminated in the eNB on the network side) may perform functions such as scheduling, automatic repeat request (ARQ), and hybrid ARQ (HARQ). The PDCP layer (terminated in the eNB on the network side) may perform the user plane functions such as header compression, integrity protection, and ciphering.

Referring to FIG. 4, the RLC and MAC layers (terminated in the eNB on the network side) may perform the same functions for the control plane. The RRC layer (terminated in the eNB on the network side) may perform functions such as broadcasting, paging, RRC connection management, RB control, mobility functions, and UE measurement reporting and controlling. The NAS control protocol (terminated in the MME of gateway on the network side) may perform functions such as a SAE bearer management, authentication, LTE_IDLE mobility handling, paging origination in LTE_IDLE, and security control for the signaling between the gateway and UE.

FIG. 5 shows an example of a physical channel structure. A physical channel transfers signaling and data between PHY layer of the UE and eNB with a radio resource. A physical channel consists of a plurality of subframes in time domain and a plurality of subcarriers in frequency domain. One subframe, which is 1ms, consists of a plurality of symbols in the time domain. Specific symbol(s) of the subframe, such as the first symbol of the subframe, may be used for a physical downlink control channel (PDCCH). The PDCCH carries dynamic allocated resources, such as a physical resource block (PRB) and modulation and coding scheme (MCS).

A DL transport channel includes a broadcast channel (BCH) used for transmitting system information, a paging channel (PCH) used for paging a UE, a downlink shared channel (DL-SCH) used for transmitting user traffic or control signals, a multicast channel (MCH) used for multicast or broadcast service transmission. The DL-SCH supports HARQ, dynamic link adaptation by varying the modulation, coding and transmit power, and both dynamic and semi-static resource allocation. The DL-SCH also may enable broadcast in the entire cell and the use of beamforming.

A UL transport channel includes a random access channel (RACH) normally used for initial access to a cell, an uplink shared channel (UL-SCH) for transmitting user traffic or control signals, etc. The UL-SCH supports HARQ and dynamic link adaptation by varying the transmit power and potentially modulation and coding. The UL-SCH also may enable the use of beamforming.

The logical channels are classified into control channels for transferring control plane information and traffic channels for transferring user plane information, according to a type of transmitted information. That is, a set of logical channel types is defined for different data transfer services offered by the MAC layer.

The control channels are used for transfer of control plane information only. The control channels provided by the MAC layer include a broadcast control channel (BCCH), a paging control channel (PCCH), a common control channel (CCCH), a multicast control channel (MCCH) and a dedicated control channel (DCCH). The BCCH is a downlink channel for broadcasting system control information. The PCCH is a downlink channel that transfers paging information and is used when the network does not know the location cell of a UE. The CCCH is used by UEs having no RRC connection with the network. The MCCH is a point-to-multipoint downlink channel used for transmitting multimedia broadcast multicast services (MBMS) control information from the network to a UE. The DCCH is a point-to-point bidirectional channel used by UEs having an RRC connection that transmits dedicated control information between a UE and the network.

Traffic channels are used for the transfer of user plane information only. The traffic channels provided by the MAC layer include a dedicated traffic channel (DTCH) and a multicast traffic channel (MTCH). The DTCH is a point-to-point channel, dedicated to one UE for the transfer of user information and can exist in both uplink and downlink. The MTCH is a point-to-multipoint downlink channel for transmitting traffic data from the network to the UE.

Uplink connections between logical channels and transport channels include the DCCH that can be mapped to the UL-SCH, the DTCH that can be mapped to the UL-SCH and the CCCH that can be mapped to the UL-SCH. Downlink connections between logical channels and transport channels include the BCCH that can be mapped to the BCH or DL-SCH, the PCCH that can be mapped to the PCH, the DCCH that can be mapped to the DL-SCH, and the DTCH that can be mapped to the DL-SCH, the MCCH that can be mapped to the MCH, and the MTCH that can be mapped to the MCH.

An RRC state indicates whether an RRC layer of the UE is logically connected to an RRC layer of the E-UTRAN. The RRC state may be divided into two different states such as an RRC idle state (RRC_IDLE) and an RRC connected state (RRCCONNECTED). In RRC IDLE, the UE may receive broadcasts of system information and paging information while the UE specifies a discontinuous reception (DRX) configured by NAS, and the UE has been allocated an identification (ID) which uniquely identifies the UE in a tracking area and may perform public land mobile network (PLMN) selection and cell re-selection. Also, in RRC_IDLE, no RRC context is stored in the eNB.

In RRC CONNECTED, the UE has an E-UTRAN RRC connection and a context in the E-UTRAN, such that transmitting and/or receiving data to/from the eNB becomes possible. Also, the UE can report channel quality information and feedback information to the eNB. In RRC_CONNECTED, the E-UTRAN knows the cell to which the UE belongs. Therefore, the network can transmit and/or receive data to/from UE, the network can control mobility (handover and inter-radio access technologies (RAT) cell change order to GSM EDGE radio access network (GERAN) with network assisted cell change (NACC)) of the UE, and the network can perform cell measurements for a neighboring cell.

In RRC_IDLE, the UE specifies the paging DRX cycle. Specifically, the UE monitors a paging signal at a specific paging occasion of every UE specific paging DRX cycle. The paging occasion is a time interval during which a paging signal is transmitted. The UE has its own paging occasion. A paging message is transmitted over all cells belonging to the same tracking area. If the UE moves from one tracking area (TA) to another TA, the UE will send a tracking area update (TAU) message to the network to update its location.

Sidelink (SL) is described. Sidelink is UE to UE interface for ProSe direct communication and ProSe direct discovery. Sidelink comprises ProSe direct discovery and ProSe direct communication between UEs. Sidelink uses UL resources and physical channel structure similar to UL transmissions. Sidelink transmission uses the same basic transmission scheme as the UL transmission scheme. However, sidelink is limited to single cluster transmissions for all the sidelink physical channels. Further, sidelink uses a 1 symbol gap at the end of each sidelink sub-frame.

For mapping between sidelink transport channels and sidelink physical channels, a sidelink discovery channel (SL-DCH) may be mapped to a physical sidelink discovery channel (PSDCH), which carries ProSe direct discovery message from the UE. The SL-DCH is characterized by:
- fixed size, pre-defined format periodic broadcast transmission;
- support for both UE autonomous resource selection and scheduled resource allocation by eNB;
- collision risk due to support of UE autonomous resource selection; no collision when UE is allocated dedicated resources by the eNB.

Further, a sidelink shared channel (SL-SCH) may be mapped to a physical sidelink shared channel (PSSCH), which carries data from a UE for ProSe direct communication. The SL-SCH is characterized by:
- support for broadcast transmission;
- support for both UE autonomous resource selection and scheduled resource allocation by eNB;
- collision risk due to support of UE autonomous resource selection; no collision when UE is allocated dedicated resources by the eNB;
- support for HARQ combining, but no support for HARQ feedback;
- support for dynamic link adaptation by varying the transmit power, modulation and coding.

Further, a sidelink broadcast channel (SL-BCH) may be mapped to a physical sidelink broadcast channel (PSBCH), which carries system and synchronization related information transmitted from the UE. The SL-BCH is characterized by pre-defined transport format.

A physical sidelink control channel (PSCCH) carries control from a UE for ProSe direct communication. The PSCCH is mapped to the sidelink control resources. The PSCCH indicates resource and other transmission parameters used by a UE for PSSCH.

For mapping between sidelink logical channels and sidelink transport channels for ProSe direct communication, a sidelink broadcast control channel (SBCCH) may be mapped to the SL-BCH. The SBCCH is a sidelink channel for broadcasting sidelink system information from one UE to other UE(s). This channel is used only by ProSe direct communication capable UEs. Further, a sidelink traffic channel (STCH) may be mapped to the SL-SCH. The STCH is a point-to-multipoint channel, for transfer of user information from one UE to other UEs. This channel is used only by ProSe direct communication capable UEs.

ProSe direct communication is a mode of communication whereby UEs can communicate with each other directly over the PC5 interface. This communication mode is supported when the UE is served by E-UTRAN and when the UE is outside of E-UTRA coverage. Only those UEs authorized to be used for public safety operation can perform ProSe direct communication.

For ProSe direct communication, the UE supporting ProSe direct communication can operate in two modes for resource allocation, which include Mode 1 (scheduled resource allocation) and Mode 2 (UE autonomous resource selection). In Mode 1, the UE needs to be RRC_CONNECTED in order to transmit data. The UE requests transmission resources from the eNB. The eNB schedules transmission resources for transmission of sidelink control and data. The UE sends a scheduling request (dedicated scheduling request (D-SR) or random access) to the eNB followed by a ProSe buffer status report (BSR). Based on the ProSe BSR, the eNB can determine that the UE has data for a ProSe direct communication transmission and estimate the resources needed for transmission. The eNB can schedule transmission resources for ProSe direct communication using configured sidelink radio network temporary identifier (SL-RNTI). In Mode 2, a UE on its own selects resources from resource pools and performs transport format selection to transmit sidelink control and data.

ProSe direct discovery is defined as the procedure used by the UE supporting ProSe direct discovery to discover other UE(s) in its proximity, using E-UTRA direct radio signals via PC5. ProSe direct discovery is supported only when the UE is served by E-UTRAN. Upper layer handles authorization for announcement and monitoring of discovery message. Content of discovery message is transparent to AS and no distinction in AS is made for ProSe direct discovery models and types of ProSe direct discovery. The ProSe protocol ensures that only valid discovery messages are delivered to AS for announcement.

There are two types of resource allocation for discovery message announcement, which include Type 1 (UE autonomous resource selection) and Type 2 (scheduled resource allocation). Type 1 is a resource allocation procedure where resources for announcing of discovery message are allocated on a non UE specific basis. In Type 1, the eNB provides the UE(s) with the resource pool configuration used for announcing of discovery message. The configuration may be signaled in broadcast or dedicated signaling. The UE autonomously selects radio resource(s) from the indicated resource pool and announce discovery message. The UE can announce discovery message on a randomly selected discovery resource during each discovery period. Type 2 is a resource allocation procedure where resources for announcing of discovery message are allocated on per UE specific basis. In Type 2, the UE in RRC_CONNECTED may request resource(s) for announcing of discovery message from the eNB via RRC. The eNB assigns resource(s) via RRC. The resources are allocated within the resource pool that is configured in UEs for monitoring.

LTE-wireless local area network (WLAN) aggregation (LWA) is described. It may be referred to Section 22A.1.1, 22A.1.2 of 3GPP TS 36.300 V13.2.0 (2015-12) and R2-162024 "TS 36.360 v1.1.0 on LTE-WLAN Aggregation Adaptation Protocol (LWAAP)". E-UTRAN supports LWA operation whereby a UE in RRC CONNECTED is configured by the eNB to utilize radio resources of LTE and WLAN. Two scenarios are supported depending on the backhaul connection between LTE and WLAN, one of which is non-collocated LWA scenario for a non-ideal backhaul, and the other is collocated LWA scenario for an ideal/internal backhaul.

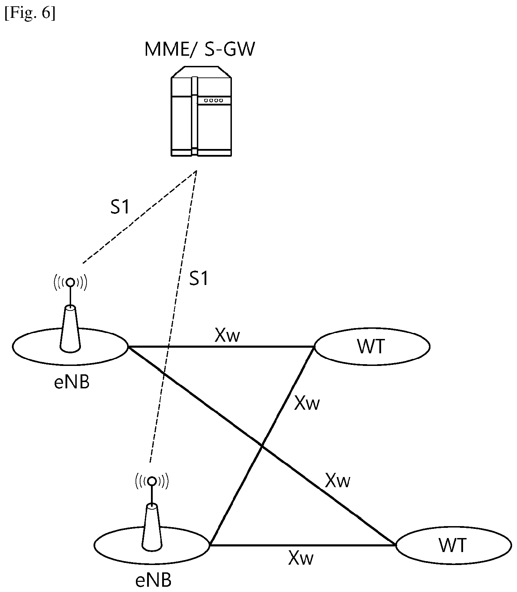

FIG. 6 shows a non-collocated LWA overall architecture. In FIG. 6, WLAN termination (WT) is a logical node that terminates the Xw interface on the WLAN side. The eNBs and WTs are connected to each other via the Xw interface.

For efficient LWA operation, a LWA adaption protocol (LWAAP) may be defined. RRC is generally in control of the LWAAP configuration. Functions of the LWAAP sublayer are performed by LWAAP entities. An LWAAP entity delivers/receives the LWAAP data protocol data unit (PDU) to/from a lower layer entity. Transfer of user plane data is provided by LWAAP entity to upper layers (i.e. PDCP). Further, transfer of user plane data is expected by LWAAP entity from lower layers. The LWAAP sublayer supports transfer of user plane data, and identification of the LWA bearer to which the LWAAP SDU belongs.

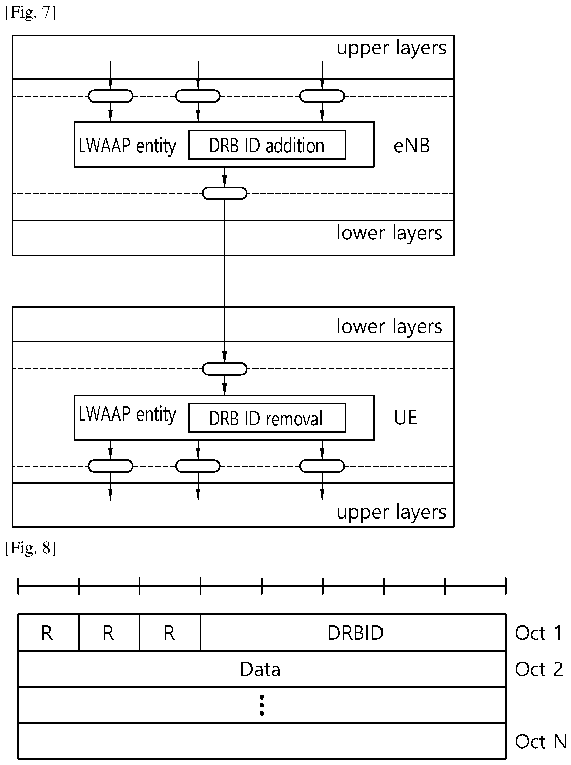

FIG. 7 shows an overview model of a LWAAP sublayer. Referring to FIG. 7, for an LWAAP entity configured at the eNB, there is a peer LWAAP entity configured at the UE and vice versa. For all LWA bearers, there is one LWAAP entity in the eNB and one LWAAP entity in the UE. An LWAAP entity receives/delivers LWAAP service data units (SDUs) from/to upper layers (i.e. PDCP layer) and sends/receives LWAAP PDUs to/from its peer LWAAP entity via WLAN. At the eNB, when an LWAAP entity receives an LWAAP SDU from upper layers, the LWAAP entity of the eNB constructs the corresponding LWAAP PDU and delivers it to lower layers. At the UE, when an LWAAP entity receives an LWAAP PDU from lower layers, the LWAAP entity of the UE reassembles the corresponding LWAAP SDU and delivers it to upper layers.

When receiving an LWAAP data PDU from lower layers, the LWAAP entity in the UE shall identify the upper layer entity to which the LWAAP SDU is destined based on the data RB (DRB) ID included in the LWAAP header, reassemble the LWAAP SDU from the LWAAP data PDU by removing the LWAAP header from the LWAAP data PDU, and deliver the reassembled LWAAP SDU to the upper layer entity identified by the DRB ID. Further, when an LWAAP entity receives an LWAAP PDU that contains reserved or invalid values, the LWAAP entity shall discard the received PDU.

An LWAAP PDU is a bit string that is byte aligned (i.e. multiple of 8 bits) in length. bit strings are represented by tables in which the most significant bit is the leftmost bit of the first line of the table, the least significant bit is the rightmost bit on the last line of the table, and more generally the bit string is to be read from left to right and then in the reading order of the lines. The bit order of each parameter field within an LWAAP PDU is represented with the first and most significant bit in the leftmost bit and the last and least significant bit in the rightmost bit. An LWAAP SDU is a bit string that is byte aligned (i.e. multiple of 8 bits) in length. An LWAAP SDU is included into an LWAAP PDU from the first bit onward. The LWAAP entity shall ignore the value of reserved bits in downlink LWAAP PDUs.

FIG. 8 shows a LWAAP data PDU. Only one type of LWAAP PDU is defined, i.e. LWAAP data PDU. Referring to FIG. 8, an LWAAP PDU consists of an LWAAP header and a data field. An LWAAP header is one byte, and consists of the four header fields R/R/R/DRBID. The R field is a reserved bit, set to "0". The R field size is 1 bit. The DRBID field indicates the RRC configured DRB identity to which the corresponding LWAAP SDU belongs. The DRBID field size is 5 bits. A data field is of variable size, and consists of an LWAAP SDU.

In LWA, the radio protocol architecture that a particular bearer uses depends on the LWA backhaul scenario and how the bearer is set up. Two bearer types exist for LWA: split LWA bearer and switched LWA bearer. Split LWA bearer is a bearer whose radio protocols are located in both the eNB and the WLAN to use both eNB and WLAN radio resources in LWA. Switched LWA bearer is a bearer whose radio protocols are located in both the eNB and the WLAN but uses WLAN radio resources only in LWA.

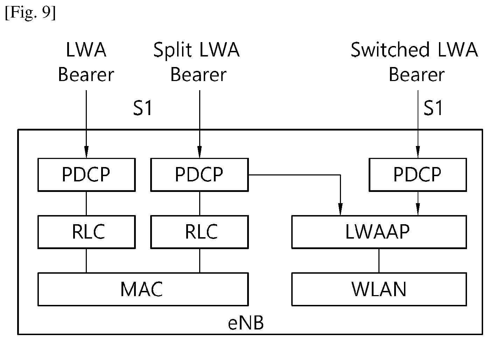

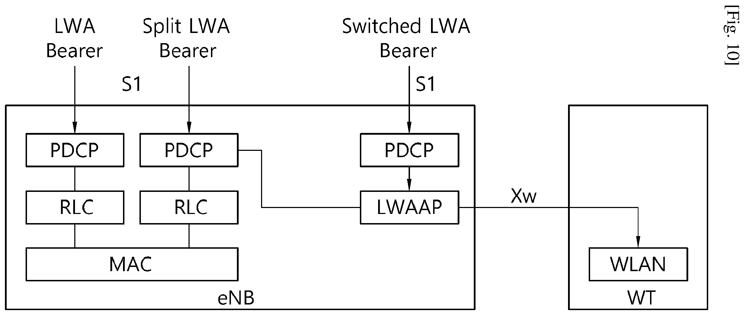

FIG. 9 shows LWA radio protocol architecture for a collocated scenario. FIG. 10 shows LWA radio protocol architecture for a non-collocated scenario. Referring to FIG. 9 and FIG. 10, split LWA bearer is split in the PDCP layer and provided to the LWAAP layer for WLAN. Accordingly, radio protocol of the split LWA bearer is located in both the eNB and the WLAN to use both eNB and WLAN radio resources. Switched LWA bearer is provided by the PDCP layer to the LWAAP layer for WLAN. Accordingly, radio protocol of the switched LWA bearer is located in both the eNB and the WLAN but uses WLAN radio resources only.

For PDUs sent over WLAN in LWA operation, the LWAAP entity generates LWA PDU containing a DRB identity and the WT uses the LWA EtherType for forwarding the data to the UE over WLAN. The UE uses the LWA EtherType to determine that the received PDU belongs to an LWA bearer and uses the DRB identity to determine to which LWA bearer the PDU belongs to. In the DL, LWA supports split bearer operation where the PDCP sublayer of the UE supports in-sequence delivery of upper layer PDUs. In the UL, PDCP PDUs can only be sent via the LTE. The UE supporting LWA may be configured by the eNB to send PDCP status report or LWA PDCP status report, in cases where feedback from WT is not available.

LTE/WLAN radio level integration with IPsec tunnel (LWIP) is described. It may be referred to R2-161927 "Stage-2 text for LWIP Tunnel Clarifications". LWIP feature allows a UE in RRC_CONNECTED to be configured by the eNB to utilize WLAN radio resources via IPsec tunneling.

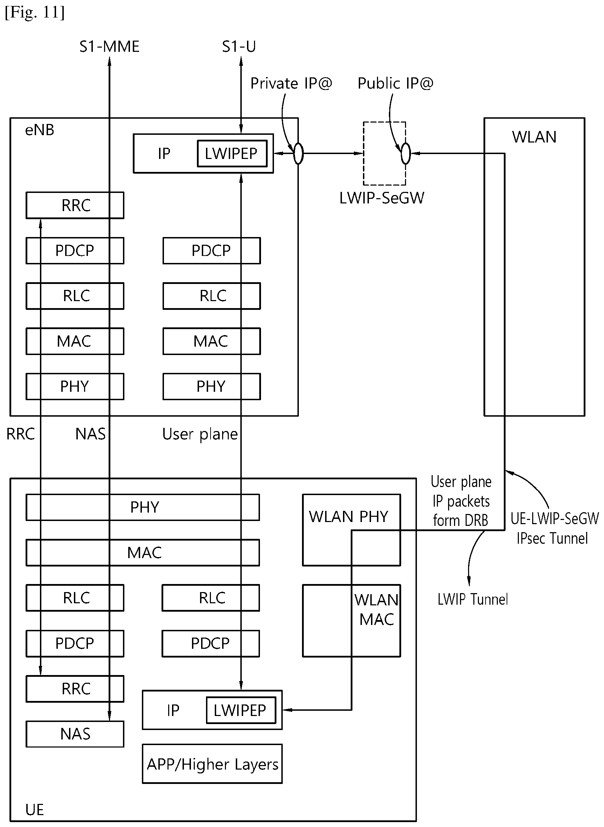

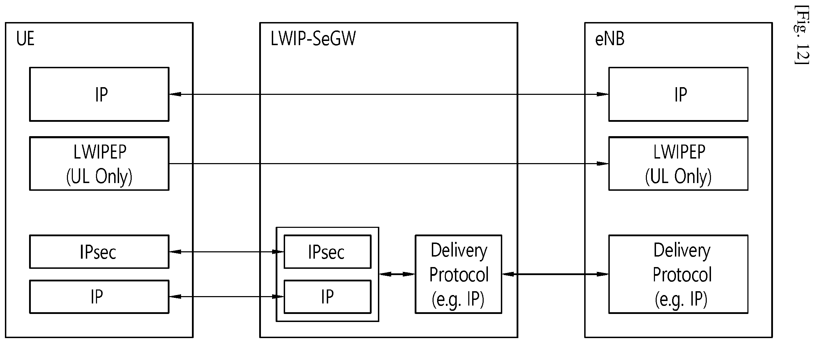

FIG. 11 shows LWIP protocol architecture. FIG. 12 shows an end-to-end protocol stack for a bearer transported over LWIP tunnel. Referring to FIG. 11 and FIG. 12, connectivity between eNB and WLAN is over IP. The IP packets transferred between the UE and LWIP-SeGW are encapsulated using IPsec in order to provide security to the packets that traverse WLAN. The IP packets are then transported between the LWIP-SeGW and eNB. The end to end path between the UE and eNB via the WLAN network is referred to as the LWIP tunnel. That is, LWIP encapsulation protocol (LWIPEP) in IP layer of the UE encapsulates IP packets and the encapsulated IP packet are transferred to LWIP-SeGW via LWIP tunnel.

The *RRCConnectionReconfiguration* message provides the necessary parameters for the UE to initiate the establishment of the IPSec tunnel. When the IPsec tunnel is established, a data bearer can be configured to use LWIP resources. The DRB configuration on the LTE access corresponding to the data bearer using IPsec resources shall not be released. The data bearer refers to the evolved packet system (EPS) bearer mapped to the DRB which is maintained on the LTE side.

A single IPSec tunnel is used per UE for all the data bearers that are configured to send and/or receive data over WLAN. Each data bearer may be configured so that traffic for that bearer can be routed over the IPsec tunnel in either only DL or both UL and DL over WLAN. Signaling bearers (SRBs) are carried over LTE only. The eNB configures specific bearer(s) to use the IPsec tunnel. If the IPsec tunnel is established, then it is expected that eNB routes packets belonging to the data bearer via the LTE access or via the IPSec tunnel. If eNB implementation routes packets to both LTE access and the IPSec tunnel simultaneously, then delivery of packets to upper layers at the UE may occur out of order.

For the DL of a data bearer, the packets received from the IPsec tunnel are forwarded directly to upper layers. For the UL, the eNB configures the UE to route the UL data either via LTE or via WLAN using RRC signaling. If routed via WLAN, then all UL traffic of the data bearer is offloaded to the WLAN. UL bearer packets sent over the LWIP tunnel are encapsulated using LWIPEP with the 'Key' field in the LWIPEP header populated with the DRB Identity associated with offloaded UL bearer.

The release of the IPsec tunnel is initiated by the eNB. Upon receiving the handover command or on transition to RRC_IDLE state, the UE shall autonomously release IPsec tunnel configuration and the use of it by the data bearers. Further, a UE supporting LWIP may be configured for WLAN measurements.

The same UE cannot be simultaneously configured with LWA and LWIP.

ProSe UE-to-Network relay is described. It may be referred to Section 23.10.4 of 3GPP TS 36.300 V13.2.0 (2015-12). ProSe UE-to-Network relay is a UE that provides functionality to support connectivity to unicast services for remote UE(s). ProSe UE-to-Network relay may be referred to simply as a relay UE. A remote UE is a ProSe-enabled public safety UE that communicates with a PDN via a ProSe UE-to-Network relay. A relay UE provides generic L3 forwarding function that can relay any type of IP traffic between the remote UE and the network. One-to-one sidelink communication is used between the remote UE and the relay UE. The remote UE is authorized by upper layer and can be in-coverage or out-of-coverage of E-UTRAN for UE-to-Network relay discovery, (re)selection and communication. The relay UE is always in-coverage of EUTRAN. The relay UE and the remote UE performs sidelink communication and sidelink discovery.

The eNB controls whether the UE can act as a relay UE. If the eNB broadcast any information associated to ProSe UE-to-Network relay operation, then ProSe UE-to-Network relay operation is supported in the cell. The eNB may provide transmission resources for ProSe UE-to-Network relay discovery using broadcast for RRC_IDLE state and dedicated signaling for RRC_CONNECTED state, and monitoring resources for ProSe UE-to-Network relay discovery using broadcast signaling. The eNB may broadcasts a minimum and/or a maximum Uu link quality (reference signal received power (RSRP)/reference signal received quality (RSRQ)) threshold(s) that the relay UE needs to respect to autonomously start or stop the UE-to-Network relay discovery procedure. If the eNB does not broadcast transmission resource pool for ProSe-UE-to-Network relay discovery, then UE can initiate request for ProSe-UE-to-Network relay discovery resources by dedicated signaling, respecting these broadcasted threshold(s). If the ProSe-UE-to-Network relay is initiated by broadcast signaling, it can perform ProSe UE-to-Network relay discovery when in RRC_IDLE. If the ProSe UE-to-Network relay is initiated by dedicated signaling, it can perform relay discovery as long as it is in RRC_CONNECTED.

A relay UE performing sidelink communication for ProSe UE-to-Network relay operation has to be in RRC_CONNECTED. After receiving a layer-2 link establishment request (upper layer message) from the remote UE, the relay UE indicates to the eNB that it is relay UE and intends to perform ProSe UE-to-Network relay sidelink discovery and communication. The eNB may provide resources for ProSe UE-to-Network relay discovery and communication.

The remote UE can decide when to start monitoring for ProSe UE-to-Network relay discovery. The remote UE can transmit ProSe UE-to-Network relay discovery solicitation message while in RRC_IDLE or in RRC_CONNECTED depending on the configuration of resources for ProSe UE-to-Network relay discovery. The eNB may broadcast a threshold, which is respected by remote UE to transmit ProSe UE-to-Network relay discovery solicitation message, to connect or communicate with relay UE. The RRC_CONNECTED remote UE, respects the broadcasted threshold to indicate to eNB that it is a remote UE and wants to participate in ProSe UE-to-Network Relay discovery and communication. The eNB may provide, transmission resources using broadcast or dedicated signaling and reception resources using broadcast singnaling for ProSe UE-to-Network relay operation. Remote UE stops using ProSe UE-to-Network Relay communication resources when RSRP goes above the broadcasted threshold.

The remote UE performs radio measurement at PC5 interface and uses it for ProSe UE-to-Network Relay selection and reselection along with higher layer criterion. A relay UE is considered suitable in terms of radio criteria if the PC5 link quality exceeds configured threshold (pre-configured or provided by eNB). The remote UE selects the relay UE, which satisfies higher layer criterion and has best PC5 link quality among all suitable relay UEs.

The remote UE triggers ProSe UE-to-Network relay reselection when PC5 signal strength of current relay UE is below configured signal strength threshold. The remote UE may also trigger ProSe UE-to-Network relay reselection when it receives a layer-2 link release message (upper layer message) from the relay UE.

Wearable devices, such as smart watches, are now available as a new type of UE on the market. Wearable devices on the market may support non-3GPP RAT, such as Bluetooth and WLAN, for a short range communication RAT between UEs. Accordingly, enhanced connectivity via non-3GPP RAT, such as Bluetooth or WLAN, can be proposed. In the meantime, Bluetooth and WLAN cannot fully support various services with different quality of services (QoS). Thus, it is also necessary to provide the enhanced connectivity via 3GPP sidelink.

Hereinafter, a method for relaying using non-3GPP RAT is proposed according to an embodiment of the present invention. According to an embodiment of the present invention, a radio control plane protocol stack for supporting relay UE via non-3GPP RAT is proposed. The non-3GPP RAT may include various RATs, such as Bluetooth, WLAN, etc. In the description below, it may be assumed that the non-3GPP RAT is WLAN for the sake of convenience. However, the present invention is not limited to WLAN. The present invention may also be applied to other non-3GPP RAT.

According to an embodiment of the present invention, a new layer for supporting relay UE via non-3GPP RAT, e.g. WLAN, may be introduced. Alternatively, the existing layer, such LWAAP layer, may be used for supporting relay UE via non-3GPP RAT, e.g. WLAN. Regardless of whether the new layer is used or the existing layer, e.g. LWAAP layer, is used, UL/DL data which needs to be relayed may be configured by the network. For this, the network may configure the bearer identity which needs to be relayed by the relay UE or may configure the bearer identity which does not need to be relayed by the relay UE.

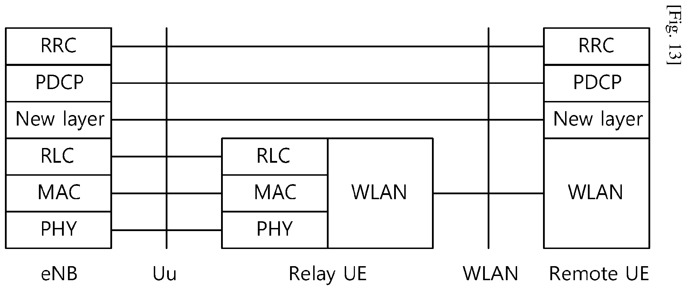

FIG. 13 shows an example of a radio control plane protocol stack for supporting relay UE via WLAN according to an embodiment of the present invention. Referring to FIG. 13, the new layer (or, the existing layer, e.g. LWAAP layer) is transparent to the relay UE. That is, the new layer (or, the existing layer, e.g. LWAAP layer) is only present in the eNB and the remote UE. In this radio control plane protocol stack, upon receiving DL data from the eNB or UL data from the remote UE, the relay UE may determine whether the data needs to be relayed or not. How to determine whether the data needs to be relayed or not will be described later in detail. The DL data which needs to be relayed may be transmitted to the remote UE via WLAN. The DL data which does not need to be relayed may be forwarded to the upper layer of the relay UE. The UL data which needs to be relayed may be transmitted to the eNB via Uu interface. The UL data which does not need to be relayed may be forwarded to the upper layer of the relay UE. Meanwhile, the radio control plane protocol stack shown in FIG. 13 may also be used for a radio user plane protocol stack, without RRC.

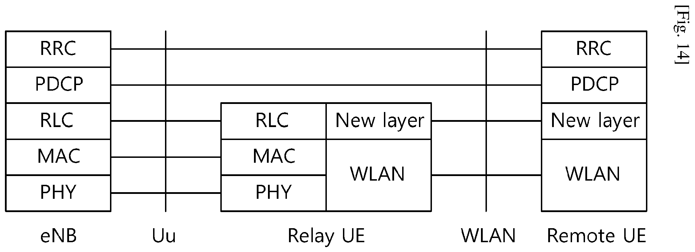

FIG. 14 shows another example of a radio control plane protocol stack for supporting relay UE via WLAN according to an embodiment of the present invention. Referring to FIG. 14, the new layer (or, the existing layer, e.g. LWAAP layer) is present in the eNB and the relay UE. In this radio control plane protocol stack, upon receiving DL data from the eNB or UL data from the remote UE, the relay UE may determine whether the data needs to be relayed or not. How to determine whether the data needs to be relayed or not will be described later in detail. The DL data which needs to be relayed may be put to the new layer (or, the existing layer, e.g. LWAAP layer) in the relay UE. And then, the relay UE may transmit the DL data to the remote UE via WLAN. The DL data which does not need to be relayed may be forwarded to the upper layer of the relay UE. For UL data which needs to be relayed to the eNB, the new layer of the remote UE may add information for the relay UE. The information may include at least one of address/identity of the relay UE, address/identity of the remote UE, or, an indication which shows whether the UL data needs to be relayed or not. If the received UL data includes the information described above, the new layer of the relay UE may forward the received UL data to the eNB. Otherwise, the new layer of the relay UE may forward the received UL data to the upper layer of the relay UE. Meanwhile, the radio control plane protocol stack shown in FIG. 14 may also be used for a radio user plane protocol stack, without RRC.

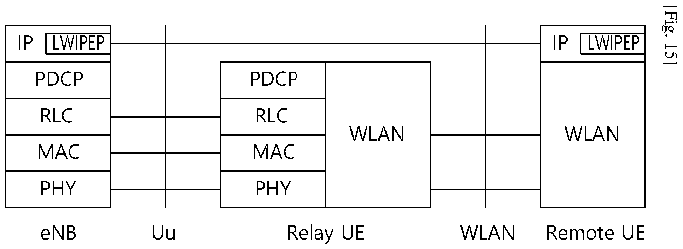

FIG. 15 shows an example of a radio protocol stack for supporting relay UE using LWIP according to an embodiment of the present invention. Referring to FIG. 15, the IP layer including LWIPEP is present in the eNB and the remote UE. The function of LWIP-SeGW may reside in the eNB, the relay UE or new entity between the eNB and the relay UE. Data may be transferred from/to the remote UE via WLAN. The signaling via SRB may also be transferred via the relay UE. The radio protocol stack shown in FIG. 15 may be used for control plane and/or user plane.

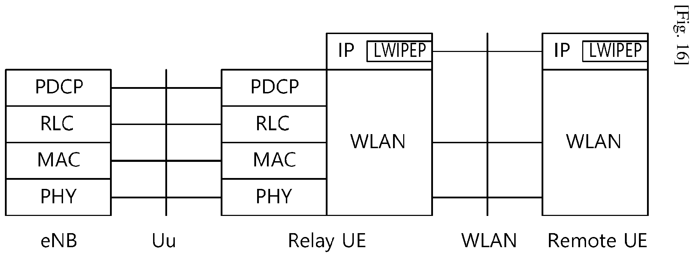

FIG. 16 shows another example of a radio protocol stack for supporting relay UE using LWIP according to an embodiment of the present invention. Referring to FIG. 16, the IP layer including LWIPEP is present in the relay UE and the remote UE. The function of LWIP-SeGW may reside in the relay UE. Data may be transferred from/to the remote UE via WLAN. The signaling via SRB may also be transferred via the relay UE. The radio protocol stack shown in FIG. 16 may be used for control plane and/or user plane.

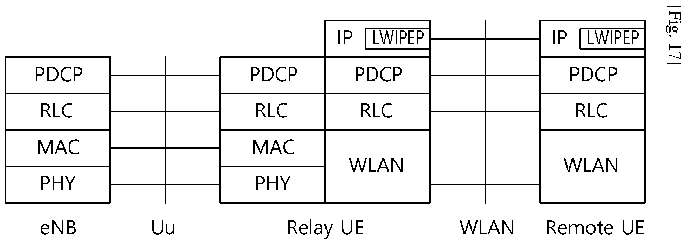

FIG. 17 shows another example of a radio protocol stack for supporting relay UE using LWIP according to an embodiment of the present invention. Referring to FIG. 17, the IP layer including LWIPEP is present in the relay UE and the remote UE. The function of LWIP-SeGW may reside in the relay UE. Data may be transferred from/to the remote UE via 3GPP sidelink, instead of WLAN. The signaling via SRB may also be transferred via the relay UE. The radio protocol stack shown in FIG. 17 may be used for control plane and/or user plane.

Hereinafter, how to determine whether the data needs to be relayed or not according to an embodiment of the present invention is described. In the radio protocol stacks described above, some DL data from the network may be destined to the remote UE, while other DL data may be destined to the relay UE itself. Likewise, some UL data from the remote UE may be destined to the network, while other UL data may be destined to the relay UE itself. In this case, from the relay UE perspective, it is necessary to determine whether the data is destined to the network/remote UE or the relay UE itself.

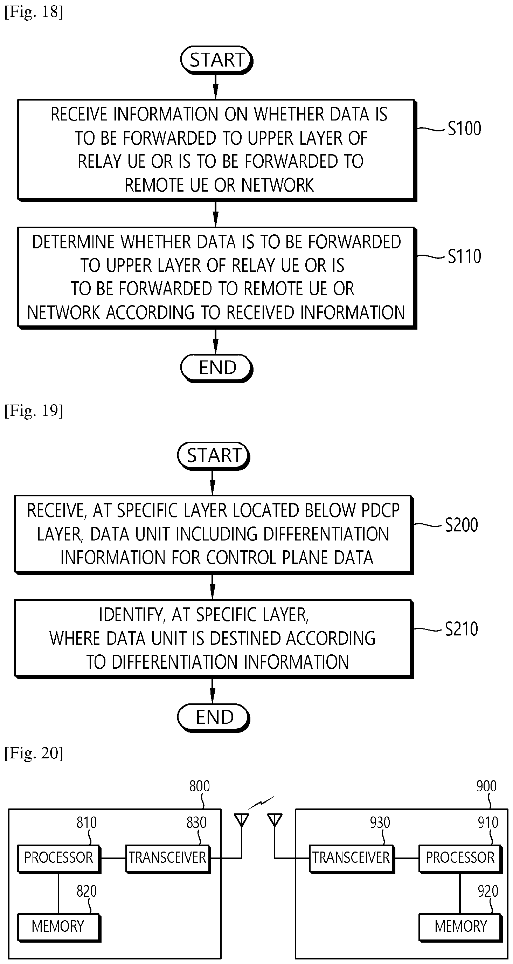

FIG. 18 shows a method for determining destination of data according to an embodiment of the present invention.

In step S100, the relay UE receives information on whether the data is to be forwarded to an upper layer of the relay UE or is to be forwarded to a remote UE or a network. The information may be new one or more logical channel ID (LCID) designated for relaying data. Or, the information may be an identity of logical channel, configured by the RRC layer, in which data to be relayed to the remote UE or network is included. If designated LCID or the configured identity of the logical channel is used for the received data, the relay UE may forward the data to the network or the remote UE. Otherwise, the relay UE may forward the received data to the upper layer of the UE.

Further, the information may be included in a media access control (MAC) header. For example, a new MAC (sub)header may be used for relaying data. If new MAC (sub)header is used for the received data, the relay UE may forward the data to the network or the remote UE. Otherwise, the relay UE may forward the received data to the upper layer of the relay UE. For another example, a new indication in MAC (sub)header may indicated whether the data needs to be relayed or not. If the new indication in MAC (sub)header indicates that the data needs to be relayed, the relay UE may forward the data to the network or the remote UE. Otherwise, the relay UE may forward the received data to the upper layer of the relay UE.

In step S110, the relay UE determines whether the data is to be forwarded to the upper layer of the relay UE or is to be forwarded to the remote UE or the network, according to the received information. Upon receiving DL data from the network or UL data from the remote UE, the relay UE determines whether the data needs to be relayed or not by the above method using the received information. When it is determined that the data needs to be relayed to the remote UE or the network, the relay UE forwards the data to the remote UE or the network. The data may be forwarded to the remote UE using a non-3GPP RAT. The non-3GPP RAT may include Bluetooth or WLAN. The data may be forwarded to the remote UE using a radio protocol stacks shown in FIG. 13 to FIG. 17. For example, the data may be forwarded to the remote UE using a non-3GPP RAT on a specific layer used for forwarding data to the remote UE. The specific layer for forwarding data to the remote UE may be a LWAAP layer.

Hereinafter, how to differentiate control plane data from user plane data according to an embodiment of the present invention is described. For DRBs, the new layer for supporting relay UE via non-3GPP RAT may function as same as the LWAAP layer. On the other hand, for control plane data, in order to identify the upper layer to which the SDU is destined, the header or indication may be added to each SDU/PDU regarding control plane data by the new layer supporting relay UE via non-3GPP RAT, shown above in radio protocol stacks in FIG. 13 to FIG. 17.

FIG. 19 shows a method for determining destination of data according to another embodiment of the present invention.

In step S200, the specific layer of the relay UE, located below the PDCP layer, receives a data unit including differentiation information for control plane data. The specific layer may be a new layer for supporting relay UE via non-3GPP RAT. Or, the specific layer may be a LWAAP layer. The control plane data may be differentiated as follows.
- No differentiation may be applied within control plane data. Control plane data is not categorized. That is, only differentiation between control plane data and user plane data may be applied. For this, the differentiation information may include one bit in (sub)header, in order to indicate that the SDU/PDU contains the control plane data.
- Control plane data may be differentiated into various categories. The various categories may include at least one of SRB, system information, paging, or NAS message. SRB may be further differentiated into SRB0, SRB1 and SRB2. In order to differentiate SRBs, logical channel identity may be used. System information may be further differentiated into master information block (MIB), system information block type-1 (SIB1) and other SIBs. For this, the differentiation information may include one bit in (sub)header, in order to indicate that the SDU/PDU contains the control plane data. In the above differentiation, one or more category may be combined into one category. For instance, SRB and NAS message may be combined into one category.

Meanwhile, since there is no radio bearer identity for system information and paging, logical channel name (e.g. PCCH, BCCH), RNTI (e.g. system information radio network temporary identity (SI-RNTI), paging RNTI (P-RNTI)) or other identifier different from logical channel identity may be used to identify in header/subheader whether the contents of SDU is system information or paging. The other identifier may be fixed in the specification.

In step S210, the specific layer of the relay UE identifies where the data unit is destined according to the differentiation information. That is, upon receiving a data PDU from lower layers, the specific layer of the relay UE may identify the upper layer entity to which the SDU is destined based on the differentiation information included in the header. Further, the specific layer of the relay UE may reassemble the SDU from the data PDU by removing the header from the data PDU. Further, the specific layer of the relay UE may deliver the reassembled SDU to the upper layer entity identified by the differentiation information.

FIG. 20 shows a wireless communication system to implement an embodiment of the present invention.

An eNB 800 includes a processor 810, a memory 820 and a transceiver 830. The processor 810 may be configured to implement proposed functions, procedures and/or methods described in this description. Layers of the radio interface protocol may be implemented in the processor 810. The memory 820 is operatively coupled with the processor 810 and stores a variety of information to operate the processor 810. The transceiver 830 is operatively coupled with the processor 810, and transmits and/or receives a radio signal.

A UE 900 includes a processor 910, a memory 920 and a transceiver 930. The processor 910 may be configured to implement proposed functions, procedures and/or methods described in this description. Layers of the radio interface protocol may be implemented in the processor 910. The memory 920 is operatively coupled with the processor 910 and stores a variety of information to operate the processor 910. The transceiver 930 is operatively coupled with the processor 910, and transmits and/or receives a radio signal.

The processors 810, 910 may include application-specific integrated circuit (ASIC), other chipset, logic circuit and/or data processing device. The memories 820, 920 may include read-only memory (ROM), random access memory (RAM), flash memory, memory card, storage medium and/or other storage device. The transceivers 830, 930 may include baseband circuitry to process radio frequency signals. When the embodiments are implemented in software, the techniques described herein can be implemented with modules (e.g., procedures, functions, and so on) that perform the functions described herein. The modules can be stored in memories 820, 920 and executed by processors 810, 910. The memories 820, 920 can be implemented within the processors 810, 910 or external to the processors 810, 910 in which case those can be communicatively coupled to the processors 810, 910 via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted.

## Claims

1. A method for determining a destination of data, by a relay user equipment, UE, in a wireless communication system, the method comprising:
receiving (S100) information on whether the data is to be forwarded to an upper layer of the relay UE or is to be forwarded to a remote UE or a network, wherein the information is included in a media access control, MAC, header;
determining (S110) whether the data is to be forwarded to the upper layer of the relay UE or is to be forwarded to the remote UE or the network based on the received information; and
forwarding the data to the remote UE or the network, when it is determined that the data is to be forwarded to the remote UE or the network,
the method being **characterized in that**:
the data is forwarded to the remote UE using a non-3rd generation partnership project, non-3GPP, radio access technology, RAT, on a specific layer used for forwarding data to the remote UE, and
wherein the specific layer for forwarding data to the remote UE is a long-term evolution, LTE, wireless local area network, WLAN, aggregation adaptation protocol, LWAAP, layer.

2. The method of claim 1, wherein the information indicates that the data is to be forwarded to the remote UE or the network.

3. The method of claim 1, wherein the information is an indication indicating whether the data is to be forwarded to the upper layer of the relay UE or is to be forwarded to the remote UE or the network.

4. The method of claim 1, wherein the non-3GPP RAT includes Bluetooth or WLAN.

## Patentansprüche

1. Verfahren zum Bestimmen eines Ziels von Daten durch ein Relais-Benutzergerät, UE (User Equipment), in einem Drahtloskommunikationssystem, wobei das Verfahren Folgendes umfasst:
Empfangen (S100) von Informationen darüber, ob die Daten an eine obere Schicht des Relais-UE weiterzuleiten sind oder an ein fernes UE oder ein Netz weiterzuleiten sind, wobei die Informationen in einem Medienzugriffssteuerungs- bzw. MAC(Media Access Control)-Header enthalten sind;
Bestimmen (S110), ob die Daten an die obere Schicht des Relais-UE weiterzuleiten sind oder an das ferne UE oder das Netz weiterzuleiten sind, basierend auf den empfangenen Informationen; und
Weiterleiten der Daten an das ferne UE oder das Netz, wenn bestimmt wird, dass die Daten an das ferne UE oder das Netz weiterzuleiten sind,
wobei das Verfahren **dadurch gekennzeichnet ist, dass**:
die Daten unter Verwendung einer Nicht-3rd-Generation-Partnership-Projekt(Nicht-3GPP)-Funkzugangstechnologie(RAT: Radio Access Technology) auf einer speziellen Schicht, die zum Weiterleiten von Daten an das ferne UE verwendet wird, an das ferne UE weitergeleitet werden, und
wobei die spezielle Schicht zum Weiterleiten von Daten an das ferne UE eine Long-Term-Evolution(LTE)-Wireless-Local-Area-Network(WLAN)-Aggregationsadaptionsprotokoll(LWAAP)-Schicht ist.

2. Verfahren nach Anspruch 1, wobei die Informationen angeben, dass die Daten an das ferne UE oder das Netz weiterzuleiten sind.

3. Verfahren nach Anspruch 1, wobei die Informationen eine Indikation sind, die angibt, ob die Daten an die obere Schicht des Relais-UE weiterzuleiten sind oder an das ferne UE oder das Netz weiterzuleiten sind.

4. Verfahren nach Anspruch 1, wobei die Nicht-3GPP-RAT Bluetooth oder WLAN einschließt.

## Revendications

1. Procédé pour déterminer une destination de données, au moyen d'un équipement utilisateur, UE, relais dans un système de communication sans fil, le procédé consistant :
à recevoir (S100) des informations indiquant si les données doivent être transmises à une couche supérieure de l'équipement utilisateur relais ou si elles doivent être transmises à un équipement utilisateur distant ou à un réseau, dans lequel les informations sont incluses dans un en-tête de contrôle d'accès au support, MAC ;
à déterminer (S110) si les données doivent être transmises à la couche supérieure de l'équipement utilisateur relais ou si elles doivent être transmises à l'équipement utilisateur distant ou au réseau en se basant sur les informations reçues ; et
à transmettre les données à l'équipement utilisateur distant ou au réseau lorsqu'il est déterminé que les données doivent être transmises à l'équipement utilisateur distant ou au réseau,
le procédé étant **caractérisé en ce que** :
les données sont transmises à l'équipement utilisateur distant à l'aide d'une technologie d'accès radio, RAT, non de projet de partenariat de troisième génération, non 3GPP, sur une couche spécifique utilisée pour transmettre des données à l'équipement utilisateur distant, et
dans lequel la couche spécifique pour transmettre des données à l'équipement utilisateur distant est une couche de protocole d'adaptation d'agrégation de réseau local sans fil, WLAN, à évolution à long terme, LTE (LWAAP).

2. Procédé selon la revendication 1, dans lequel les informations indiquent que les données doivent être transmises à l'équipement utilisateur distant ou au réseau.

3. Procédé selon la revendication 1, dans lequel les informations constituent une indication indiquant si les données doivent être transmises à la couche supérieure de l'équipement utilisateur relais ou doivent être transmises à l'équipement utilisateur distant ou au réseau.

4. Procédé selon la revendication 1, dans lequel la technologie RAT non 3GPP comprend du Bluetooth ou un réseau WLAN.
